# EUROPEAN PATENT SPECIFICATION

(11) **EP 1 987 933 B1**
(45) Date of publication and mention of the grant of the patent: **10.12.2014**
(21) Application number: 08251567.7
(22) Date of filing: 30.04.2008
(51) Int. Cl.: B29C 39/42, B29C 39/02

(54) **Method of manufacturing thick solid surface product**
Herstellungsverfahren eines dicken, festen Oberflächenproduktes
Procédé de fabrication d'un produit de surface épais et solide

(30) Priority: 01.05.2007 US 915268 P
(43) Date of publication of application: 05.11.2008
(73) Proprietor: The Diller Corporation, Cincinnati OH 45202 (US)
(72) Inventor: Reichwein, David Paul, Elizabeth Town, Pennsylvania 17022 (US); Elbon, Leonard Ray, Las Vegas, Nevada 89108 (US)
(74) Representative: Cummings, Sean Patrick

(56) References cited:
- DE-A1- 2 223 253
- US-A- 5 885 503
- US-A1- 2005 106 336
- US-E- R E27 093

## Description

### BACKGROUND OF THE INVENTION

The present invention relates to decorative solid surface products formed from filled or unfilled polymer resins, and more particularly to methods for producing solid surface products having thicknesses equal to or greater than about 3 cm.

Decorative solid surface products formed from particle filled resins have been long known and are commonly available for use on kitchen and bathroom surfaces. In general, these materials are formed from particle filled resins, the most common resins being polyesters and acrylates, with the fillers ranging widely, often used to give particular visual effects to the product.

Such solid surface products are typically available in a wide variety of appearances and colours, with patterns that run throughout the thickness of the products, giving them desirable aesthetics and utilities. These materials are also tough and resistant to heat, stains, mildew and impact, and can be easily repaired if damaged.

Commonly used pigments in these products are composed of small particles of inorganic compounds, often metallic oxides, which are roughly spherical in shape. Other pigments are also sometimes used, as well as fillers and larger pieces of coloured material or "particulates" to provide different visual effects. Alumina trihydrate (ATH) is often included as a preferred filler to provide translucency and whiteness to the products, as well as for its excellent fire-retardant properties.

Various processes are known and used in the art for producing solid surface materials in sheet form for use as countertops and tabletops in kitchens and bathrooms. A number of manufacturers have developed and introduced their own brands of solid surface materials such as, for example Du Pont (CORIAN^{®}) and Formica Corporation (FOUNTAINHEAD^{®}). The overwhelming majority of these products are 1.25 cm (1/2") in thickness. Because of the expense involved in manufacturing the products, they are distributed in nominal sized sheets that are bonded by an adhesive to a thicker and inexpensive substrate material such as medium density fiberboard, particle board, or waferboard, and then cut to form the desired countertop shape or the like. The cutting and bonding of the sheets to thicker substrates are necessary due to the thin nature of the solid surface material and the need to provide a more robust work surface. Accordingly, the finish fabrication of solid-surface sheets has always been labour intensive.

Countertops are used in a variety of locations to provide a horizontal work space. Methods for manufacturing conventional solid surface countertop materials provide relatively thin sheets of material having thicknesses of 1.25 cm (1/2") up to about 1.90 cm (3/4"). To provide finished countertops of sufficient thickness, traditionally, the sheets of solid surface material are cut into smaller pieces which are then glued to the edges and/or ends of the solid surface sheets. The glued ends and/or edges then must be sanded or polished to remove any visible glue lines. These pieces are glued together to create a thicker edge and/or end and to hide the underlying fiberboard or particle board substrate bonded to the solid surface material and then sanded down to create a finished product. The need for cutting smaller pieces, fitting and gluing those pieces to solid surface sheets, and sanding and polishing those sheets is labour intensive and adds numerous manufacturing steps which results in an end product that is more expensive for the consumer.

Attempts have been made in the past to produce solid surface sheet materials having greater thicknesses (i.e., greater than about 3.0 cm/1.25"). For example, Slocum, U.S. Reissue Patent No. 27,093, teaches the preparation of a thick solid surface material comprising a methyl methacrylate polymer and a filler using as a catalyst a hemi-perester of maleic acid and curing the polymer autogenically in air at low (i.e., 15-40°C) temperature. However, such products have suffered from a number of deficiencies including incomplete curing of the polymer resins, entrapped air bubbles or voids in the cured material, a surface appearance that was not homogeneous, and warping of the product either as manufactured or after cutting at the job site. Accordingly, there remains a need in the art to provide an improved solid surface material which is thicker than previously commercially available material but which does not have the adverse characteristics of prior thick materials.

### BRIEF SUMMARY OF THE INVENTION

The present invention addresses that need by providing a method for producing a solid surface product that has a thickness of 3 cm or greater and yet is free from warping, has a homogeneous surface appearance, and is substantially free from entrapped air bubbles or voids. As used herein, references to a "thick" solid surface material means a material having a nominal thickness of 3 cm or greater.

In accordance with an aspect of the present invention, a method for producing a thick solid surface material is provided and includes forming a mixture of from about 25 to about 95 wt% of a polymer resin and from about 0 to about 70 wt% of a filler; casting the mixture into an open mold to a thickness of 3 cm or greater; applying a vacuum to the molded mixture to release entrapped gases and volatiles therein; and curing the molded mixture to produce a thick solid surface material.

While any of a number of different thermosetting polymer resins may be utilized, in a preferred form, the polymer resin is selected from the group consisting of polyester resins, polyacrylate resins, and mixtures thereof. Additionally, the fillers used in the material may also vary widely in composition. In a preferred form, the filler is selected from the group consisting of aluminium trihydrate, calcium carbonate, barium sulfate, magnesium hydroxide, talc, and mixtures thereof.

In a preferred form, the vacuum which is applied is less than about 2.07x10⁴ Pa (3 pounds per square inch absolute pressure, psia), or a vacuum greater than about 24 inches of mercury, for about 1 to 3 minutes. Preferably, the mixture is first gelled at ambient temperature and then cured at a temperature of from about 80 to about 100°C for from about 1 to about 4 hours.

Accordingly, it is a feature of the present invention that the solid surface products having thicknesses of 3 cm or greater produced by the methods of the invention may have improved dimensional stability and resultant warpage characteristics compared to those of the prior art, or may have substantially fewer air bubbles or voids compared to those of the prior art. Still other features and advantages of the present invention will be apparent from the following detailed description and the accompanying drawings.

### BRIEF DESCRIPTION OF THE SEVERAL VIEWS OF THE DRAWINGS

The following detailed description of specific embodiments of the present invention can be best understood when read in conjunction with the following drawings, where like structure is indicated with like reference numerals and in which:
Fig. 1 is a schematic cut away side view of one embodiment of the mold used in the practice of the present invention;
Fig. 2 is a schematic top view of the mold of Fig. 1;
Fig. 3 is a schematic side view of one embodiment of the vacuum chamber used in the practice of the present invention; and
Fig. 4 is a cutaway side view of one embodiment of the mold loaded into the vacuum chamber.

### DETAILED DESCRIPTION OF THE PREFERRED EMBODIMENTS

Polymer resins which are useful in the practice of embodiments of the present invention are not specifically limited as long as they can be formed into a solid surface material by curing. Preferred free radical, heat curable resins particularly useful in the practice of the present invention are thermosetting unsaturated polyester resins and thermosetting polyacrylate resins, and combinations thereof. The term resin or "syrup" commonly refers to the uncured liquid state of a polymer, where said polymer is present in solution with a suitable crosslinking monomer. Examples of useful unsaturated polyester resins are reaction products of unsaturated dicarboxylic acids, or unsaturated dicarboxylic acids and saturated dicarboxylic acids, with glycols, such as maleic acid, phthalic acid and dipropylene glycol monomers respectively. Commonly, styrene is employed as the monomeric crosslinker for the polyester resins. Examples of useful polyacrylate resins include various kinds of conventional acrylic group monomers, acrylic group partial polymers, vinyl monomers for copolymerisation other than acrylic group monomers, or oligomers. As the acrylic group monomer, (meth)acrylic ester is preferable. The use of methyl methacrylate monomer is preferred as the acrylic resin crosslinker. Additional useful thermosettable polymers include epoxies, urethanes, acrylo-urethanes, melamines and combinations thereof. The total amount of fluid polymerisable constituent in the castable composition of the present invention is from about 25 to about 95 wt%, and preferably from about 25 to about 45 wt%.

Exemplary polymer resins are unsaturated polyester resins, which are the reaction products of glycols and unsaturated dicarboxylic acids, or the reaction products of glycols and unsaturated dicarboxylic acids and saturated dicarboxylic acids. The glycol can comprise one or more of ethylene glycol, diethylene glycol, propylene glycol, dipropylene glycol, neopentyl glycol, 1,3-propanediol, 1,2-butanediol or 1,4-butanediol. The unsaturated dicarboxylic acid can be one or more of maleic acid, fumaric acid, and their anhydrides. The saturated dicarboxylic acid can be one or more of phthalic acid, isophthalic acid, terephthalic acid, adipic acid, succinic acid, pimelic acid, suberic acid, azelaic acid, sebacic acid, and their anhydrides. The above monomers are not considered exhaustive, but are those typically used in the art. Methods of preparing such polymers are well known by those versed in the art, and are also commercially available. The most common monomeric crosslinker, used in the resin syrup, is styrene, which is preferred in the practice of the present invention. The viscosity of the castable syrup composition is related to the molecular weight of the polymer, as well as its concentration in the monomer, which can be varied in such a way as to control the rheology of the syrup composition.

Another exemplary polymer resin is poly(methyl methacrylate). As a castable composition, it is typically introduced as a solution or syrup of the polymer preferably dissolved in methyl methacrylate monomer. As for the polyester resins previously described, methods of preparing such a polymer and syrup therefrom are well known and described in the prior art, and are both commercially available as well. The viscosity of the castable syrup composition is related to the molecular weight of the polymer, as well as its concentration in the monomer, which can be varied in such a way as to control the rheology of the syrup composition.

Other polymerisable polyacrylate monomers useful as fluid polymerisable constituents are alkyl acrylates and methacrylates in which the alkyl groups can vary from 1-18 carbon atoms, but preferably 1-4 carbon atoms. Suitable acrylic monomers are methyl acrylate; ethyl acrylate and methacrylate; n-propyl and i-propyl acrylates and methacrylates; n-butyl, 2-butyl, i-butyl and t-butyl acrylates and methacrylates; 2-ethylhexyl acrylate and methacrylate; cyclohexyl acrylate and methacrylate; omega-hydroxyalkyl acrylates and methacrylates; N,N-dialkylaminoalkyl acrylates and methacrylates; N-[t-butyl]aminoethyl acrylate and methacrylate; styrene; vinyl acetate; acrylonitrile, methacrylonitrile; acrylamide and methacrylamide; allyl acrylate and methacrylate; divinylbenzene and divinyltoluene. The above reactive monomers are not considered exhaustive, but are those typically used in the art.

While the solid surface material can be unfilled, it is preferred in some embodiments to include a filler. Suitable fillers include, for example, aluminium trihydrate, calcium carbonate, titanium dioxide, barium sulfate, magnesium hydroxide, and talc, which as examples, are not considered to be exhaustive and not intended to limit the scope of the claimed invention. Fillers can be present in amounts of from between about 0 to about 70 wt%. Preferably, fillers are added to the composition in amounts from about 50 to about 70 wt%.

It is also known to include in solid surface materials other additives such as pigments, dyes, flame retardant agents, release agents, fluidizing agents, viscosity control agents, curing agents, antioxidants, toughening agents, and the like as is well known to those of ordinary skill in the art. For example, additional pigments having differing or contrasting colours may also be added to the composition. The inclusion of minor amounts of any or all of these additives is contemplated.

In producing the solid surface material, the polymer resin, preferably in syrup form, is mixed optionally with a filler and any other conventional additives deemed beneficial. From about 25 to about 95 wt% of the polymer resin and from about 0 to about 70 wt% of the filler, and preferably from about 25 to about 45 wt% of the polymer resin and from about 50 to about 70 wt% of the filler, are mixed together. In a preferred embodiment of the present invention, a mixture from about 80 to about 90 wt% polyester resin syrup, and from about 10 to about 20 wt% polyacrylate resin syrup is employed as the polymer constituent of the blend, wherein the polyester resin tends to impart toughness and the acrylic resin tends to impart flexibility to the final cured product. Any suitable mixing method may be used, including a dispersing-type blade mixer, kneading mixer, screw mixer, or double planetary mixer. A suitable curing catalyst is also preferably added to the mixture, with the catalyst type and concentration being matched to the particular polymer or polymers, and processing conditions, being used.

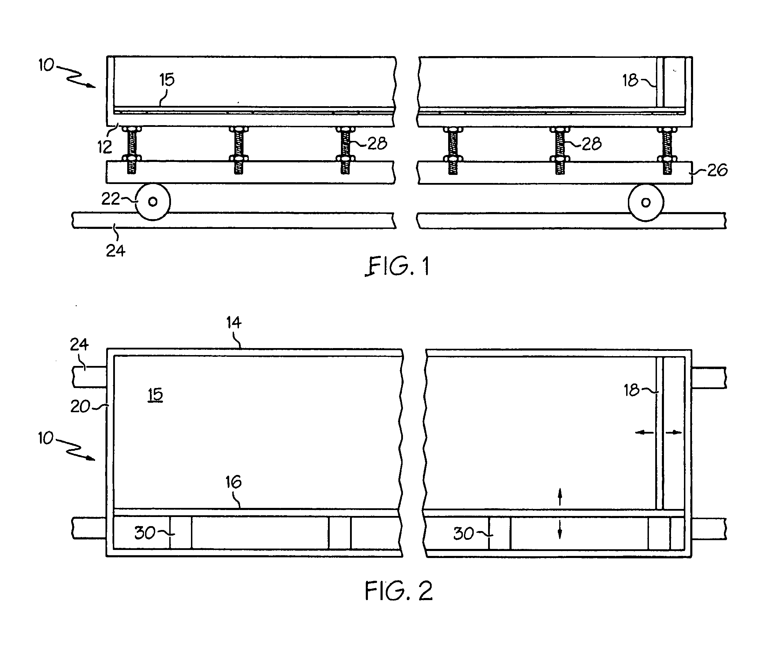

The syrup mixture is dispensed from the mixing vessel and cast into a suitable open mold which is sized to provide a sheet of solid surface material having the desired length, width, and thickness dimensions. In a preferred embodiment as shown in Fig. 1, the base **12** of the mold **10** supports a smooth, flat surface **15** such as a large pane of glass or sheet of polished metal. Typical dimensions for the glass are up to 152 cm (60 inches) wide and up to 406 cm (160 inches) in length. The mold **10** includes side walls **14** and **16** and end walls **18** and **20.** Preferably at least one moveable side wall **16** and at least one moveable end wall **18** are provided. This provides flexibility in the sizes of sheets of the solid surface material which can be cast. The side and end walls are of a height which is greater than a typical cast thickness for the solid surface material. The walls may be of metal or plastic and are designed to act as a dam for the liquid resin composition as it is cast into the mold. A suitable mold release agent may be applied to the base and walls of the mold to aid in the removal of the solid surface material once it has been cured.

As shown in Fig. 1, mold **10** can be equipped with means for moving the mold such as caster wheels **22** positioned on rails **24.** The caster wheels **22** are attached to a frame **26** which includes a plurality of levelling bolts **28.** The levelling bolts are used to maintain the mold in a level, horizontal orientation during casting and curing of the resin mixture.

As best shown in Fig. 2, side wall **16** and end wall **18** are moveable to adjust the length and width of the cast composition. For example, different length blocks **30** may be used to secure the moveable side and end walls into proper position. Alternatively, other mechanical devices such as clamps or bolts (not shown) may be used to adjust and then secure the moveable side and end wall as needed.

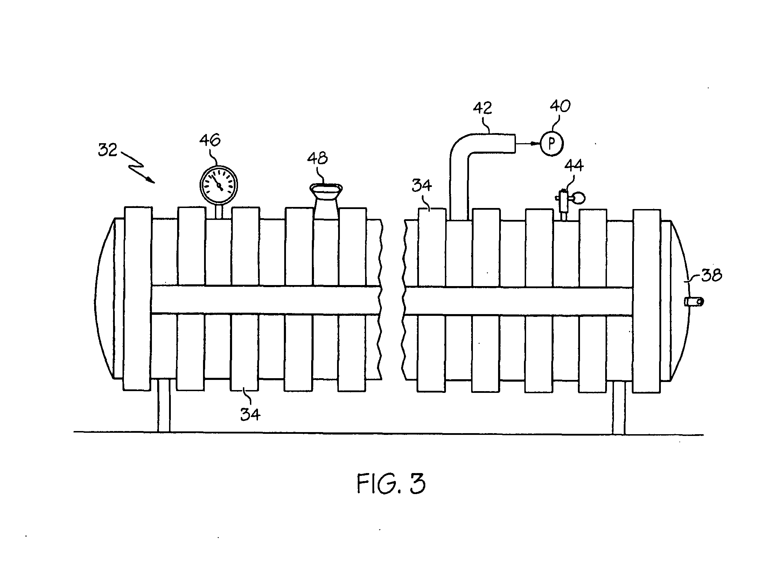

Fig. 3 depicts a suitable vacuum chamber **32** which can be used in the practice of the invention. While one form of a vacuum chamber is shown by example only, it will be apparent to those skilled in this art that other forms of vacuum chambers may be utilized. Chamber **32** is fabricated of a suitable material such as steel, including reinforcing ribs **34.** The chamber may be equipped with a hinged door **38** which is gasketed to permit an air-tight seal to be made when the door is closed. The chamber **32** is connected to a source of vacuum such as a vacuum pump **40** through vacuum line **42.** Chamber **32** is also be equipped with a vent valve **44** to control the level of vacuum in the chamber, and a vacuum gauge **46** to permit an operator to monitor and adjust the level of vacuum as needed. As shown, the chamber **32** may also be provided with a sight glass **48** which permits an operator to view the progress of the orientation of the anisotropic pigment particles in the molded resin composition mixture.

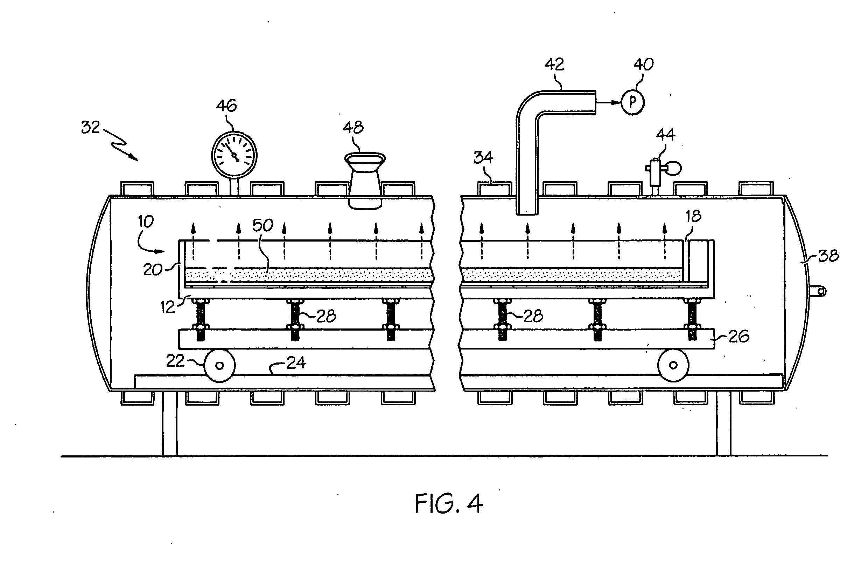

As best shown in Fig. 4, the mold **10,** containing the cast polymer mixture 50, is placed into vacuum chamber **32** that is sized to be able to completely contain the mold. In the exemplary equipment shown in the drawings, the mold may be supported on wheeled casters on rails so that it can be conveniently rolled into and out of chamber **32.** Once mold **10** has been loaded into chamber **32,** a vacuum is applied using pump **40** through vacuum line **42.** As pressure in the chamber is reduced, air and volatile materials (such as monomers) dissolved or entrapped in the liquid polymer resin syrup are "boiled" or stripped off of the cast material as depicted by the vertical arrows (drawn in phantom lines) in Fig. 4. Generally, the applied vacuum is less than about 2.07x10⁴ Pa (3 psia) pressure. Application of the vacuum for from about 1 to about 3 minutes will typically be sufficient to cause any entrapped or dissolved monomer or air to be stripped from the cast material.

An important benefit of degassing and deaerating the cast liquid resin in situ in the mold by means of a vacuum chamber, rather than vacuum deaeration of the bulk resin composition in its mixing vessel before dispensing the resin to the mold, as taught in the prior art, is that reaeration of the resin during the pouring process is avoided, and the actual deaeration process is considerably more efficient and effective, with at least about 50 times the surface area of the liquid resin exposed to the vacuum atmosphere, analogous to a thin film evaporation process. As a result, the final cast and cured solid surface product contains substantially fewer air bubble voids than sheets produced using prior art methods.

After sufficient time is allowed for the out-gassing to occur, the vacuum is released by stopping and isolating vacuum pump **40** and opening vent valve **44,** and the mold **10** is then removed from vacuum chamber **32** by opening door **38** and rolling the mold out of the chamber. The cast resin **50** is permitted to gel and harden at ambient temperature for a period of time, typically from about 30 minutes to about 3 hours. Once the resin has substantially completely solidified or set, the solid surface material sheet is de-molded and placed in a "post-cure" oven (not shown) to complete the polymerisation and curing process.

Post-curing is typically carried out at temperatures of from about 80 to about 100°C for a period of from about 1 to about 4 hours, depending on the size, thickness, and composition of the solid surface material. Preferably, heating of the post-cure oven is accomplished by re-circulation of hot air over the curing material. Cooling then takes place gradually, typically by reducing the temperature of that recirculating oven air at the rate of approximately 0.5°C (1°F) per minute. The cast and cured solid surface material sheet is preferably cooled down to at least 46°C (115°F) before removal from the oven. The controlled gradual cooling or annealing results in substantially less internal stresses in the final cured sheet, which significantly improves its dimensional stability and reduces the possibility of sheet warpage compared to prior art solid surface sheet products. The resulting solid surface sheets are then sanded and polished and their edges trimmed.

It is noted that terms like "preferably," "commonly," and "typically" are not utilized herein to limit the scope of the claimed invention or to imply that certain features are critical, essential, or even important to the structure or function of the claimed invention. Rather, these terms are merely intended to highlight alternative or additional features that may or may not be utilized in a particular embodiment of the present invention.

For the purposes of describing and defining the present invention it is noted that the term "substantially" is utilized herein to represent the inherent degree of uncertainty that may be attributed to any quantitative comparison, value, measurement, or other representation. The term "substantially" is also utilized herein to represent the degree by which a quantitative representation may vary from a stated reference without resulting in a change in the basic function of the subject matter at issue.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

1. A method for producing a thick solid surface material comprising, forming a mixture of from about 25 to about 95 wt% of a polymer resin and from about 0 to about 70 wt% of a filler, casting said mixture into an open mold to a thickness of 3 cm or greater, applying a vacuum to the molded mixture to release entrapped gases and volatiles therein, and curing said molded mixture to produce a thick solid surface material.

2. A method as claimed in Claim 1, in which the vacuum which is applied is less than about 2.07x10⁴ Pa (3 pounds per square inch absolute pressure, psia) for about 1 to 3 minutes.

3. A method as claimed in Claim 1 or Claim 2, in which said mixture is gelled at ambient temperature and then cured at a temperature of from about 80 to about 100°C for from about 1 to about 4 hours.

4. A method as claimed in any of Claims 1 to 3, in which the cured solid surface material is cooled after curing by reducing its temperature at a rate of about 0.5°C (1°F) per minute until said material reaches a temperature of about 46°C (115°F).

5. A method as claimed in any of Claims 1 to 4, in which said polymer resin comprises from about 25 to about 45 wt% and said filler comprises from about 50 to about 70 wt% of the solid surface material.

6. A method as claimed in any of Claims 1 to 5, wherein said polymer resin is selected from the group consisting of polyester resins, polyacrylate resins, epoxies, urethanes, acrylo-urethanes, melamines, and mixtures thereof.

7. A method as claimed in Claim 6, wherein said polymer resin comprises from about 80 to about 90 wt% polyester and from about 10 to about 20 wt% polyacrylate.

8. A method as claimed in any of Claims 1 to 7, wherein said filler is selected from the group consisting of aluminium trihydrate, calcium carbonate, barium sulfate, magnesium hydroxide, talc, and mixtures thereof.

## Patentansprüche

1. Verfahren zum Herstellen eines dicken, festen Oberflächenmaterials, folgende Schritte umfassend: Herstellen einer Mischung aus etwa 25 bis etwa 95 Gew.-% Polymerharz und etwa 0 bis etwa 75 Gew.-% Füllstoff, Gießen dieser Mischung in eine offene Form bis zu einer Dicke von 3 cm oder mehr, Beaufschlagen der geformten Mischung mit Unterdruck, um darin eingeschlossene Gase und flüchtige Materialien freizusetzen und Härten der geformten Mischung, um ein dickes, festes Oberflächenmaterial herzustellen.

2. Verfahren nach Anspruch 1, wobei der beaufschlagte Unterdruck 1 bis 3 Minuten lang weniger als 2,07×10⁴ Pa (3 Pfund pro Quadratzoll Absolutdruck, psia) beträgt.

3. Verfahren nach Anspruch 1 oder 2, wobei die Mischung bei Raumtemperatur geliert und dann etwa 1 bis etwa 4 Stunden lang bei Temperaturen von etwa 80 bis etwa 100 °C aushärtet.

4. Verfahren nach einem der Ansprüche 1 bis 3, wobei das ausgehärtete, feste Oberflächenmaterial nach dem Härten gekühlt wird, indem die Temperatur mit einer Geschwindigkeit von etwa 0,5 °C (1 °F) pro Minute reduziert wird, bis das Material eine Temperatur von etwa 46 °C (115 °F) erreicht.

5. Verfahren nach einem der Ansprüche 1 bis 4, wobei das Polymerharz zwischen etwa 25 und etwa 45 Gew.-% und der Füllstoff zwischen etwa 50 und etwa 70 Gew.-% des festen Oberflächenmaterials ausmachen.

6. Verfahren nach einem der Ansprüche 1 bis 5, wobei das Polymerharz ausgewählt ist aus der Gruppe bestehend aus Polyesterharzen, Polyacrylatharzen, Epoxidharzen, Urethanen, Acrylurethanen, Melaminen und Mischungen aus diesen.

7. Verfahren nach Anspruch 6, wobei das Polymerharz zu etwa 80 bis etwa 90 Gew.-% aus Polyester und zu etwa 10 bis etwa 20 Gew.- % aus Polyacrylat besteht.

8. Verfahren nach einem der Ansprüche 1 bis 7, wobei der Füllstoff ausgewählt ist aus der Gruppe bestehend aus Aluminiumtrihydrat, Calciumcarbonat, Bariumsulfat, Magnesiumhydroxid, Talk und Mischungen aus diesen.

## Revendications

1. Procédé de production d'un matériau de surface solide épais comprenant la formation d'un mélange d'environ 25 à environ 95 % en poids d'une résine polymère et d'environ 0 à environ 70 % en poids d'une charge, le coulage dudit mélange dans un moule ouvert à une épaisseur de 3 cm ou plus, l'application d'un vide au mélange moulé pour libérer les gaz et les éléments volatils qui y sont piégés, et le durcissement dudit mélange moulé pour produire un matériau de surface solide épais.

2. Procédé selon la revendication 1, dans lequel le vide qui est appliqué est inférieur à environ 2,07 x 10⁴ Pa (3 livres par pouce carré de pression absolue, psia) pendant environ 1 à 3 minutes.

3. Procédé selon la revendication 1 ou la revendication 2, dans lequel ledit mélange est gélifié à température ambiante puis durci à une température allant d'environ 80 à environ 100 °C pendant environ 1 à environ 4 heures.

4. Procédé selon l'une quelconque des revendications 1 à 3, dans lequel le matériau de surface solide durci est refroidi après durcissement par réduction de sa température à une vitesse d'environ 0,5 °C (1 °F) par minute jusqu'à ce que ledit matériau atteigne une température d'environ 46 °C (115 °F).

5. Procédé selon l'une quelconque des revendications 1 à 4, dans lequel ladite résine polymère comprend d'environ 25 à environ 45 % en poids et ladite charge comprend d'environ 50 à environ 70 % en poids du matériau de surface solide.

6. Procédé selon l'une quelconque des revendications 1 à 5, dans lequel ladite résine polymère est choisie dans le groupe consistant en résines de polyester, résines de poly(acrylate), époxydes, uréthanes, acrylo-uréthanes, mélamines et leurs mélanges.

7. Procédé selon la revendication 6, dans lequel ladite résine polymère comprend d'environ 80 à environ 90 % en poids de polyester et d'environ 10 à environ 20 % en poids de poly(acrylate).

8. Procédé selon l'une quelconque des revendications 1 à 7, dans lequel ladite charge est choisie dans le groupe consistant en trihydrate d'aluminium, carbonate de calcium, sulfate de baryum, hydroxyde de magnésium, talc et leurs mélanges.
